# EUROPEAN PATENT APPLICATION

(11) **EP 4 497 619 A1**
(43) Date of publication of application: **29.01.2025**
(21) Application number: 24172700.7
(22) Date of filing: 26.04.2024
(51) Int. Cl.: B60K 6/46, B60K 1/00, B60W 10/06, B60W 10/08, B60W 10/26, B60W 20/13, B60W 20/40, B60W 30/182, B60W 30/188, B60K 6/28

(54) **HYBRID POWER SYSTEM**

(30) Priority: 27.07.2023 TW 112128162
(71) Applicant: APh ePower Co., Ltd., Kaohsiung City 821 (TW)
(72) Inventor: CHENG, Yu Chi, 821 Kaohsiung City (TW); ZHANG, Jun-Cheng, 821 Kaohsiung City (TW); SU, Hsiu-Hsien, 821 Kaohsiung City (TW); HUANG, Shang-Zeng, 821 Kaohsiung City (TW)
(74) Representative: Becker, Eberhard

(57) **Abstract**

A hybrid power system (100) including a transmission module (110), a motor, an engine generator (140), an energy storage module (150), and an electrical energy distributor (130) is disclosed. The motor is connected to the transmission module (110). The electrical energy distributor (130) is coupled to the motor. The engine generator (140) is coupled to the electrical energy distributor (130). The engine generator (140) is adapted to rotate at a constant speed to generate a first power (P1), and the first power (P1) is transmitted to the motor and the energy storage module (150) by the electrical energy distributor (130).

## Description

### BACKGROUND

### Technical Field

This disclosure relates to a power system, and in particular to a hybrid power system combining an engine and a battery.

### Description of Related Art

Existing fuel vehicles have the worst fuel efficiency at low speeds. Take Taipei City as an example, Taipei City has been developed for a long time, and the surrounding area is characterized by frequent commercial activities and high population density, which leads to the saturation of the number of motor vehicles. In addition, the roads in the urban area are narrow and there are a large number of traffic signals, so most of the vehicles in the urban area are traveling at low speeds, which is why the use of the existing fuel vehicles in the urban area will result in high fuel consumption and environmental pollution.

In order to improve the shortcomings of the existing fuel vehicles, the development of hybrid electric vehicles, combining the advantages of electric vehicles and fuel vehicles, the internal combustion engine and motor of the hybrid vehicles can be automatically switched depending on the conditions at high speeds or low speeds. In short, at low speeds, the motor delivers power, while at high speeds, the internal combustion engine delivers power, thus avoiding the inefficiency of the internal combustion engine at low speeds.

However, the existing hybrid electric vehicles have to be designed with two sets of transmission systems, resulting in high production costs and complicated methods of switching between high and low speeds.

### SUMMARY

The disclosure provides a hybrid power system combining a rechargeable battery and an engine generator, capable of switching between the rechargeable battery or the engine generator to supply electrical energy to a motor at different electric quantities to enhance operating efficiency.

The hybrid power system of the disclosure includes a transmission module, a motor, an electrical energy distributor, an engine generator, and an energy storage module. The motor is connected to the transmission module. The electrical energy distributor is coupled to the motor. The engine generator is coupled to the electrical energy distributor. The energy storage module is coupled to the electrical energy distributor. The engine generator is adapted to rotate at a constant speed to generate a first power, and the electrical energy distributor provides the first power to the motor and energy storage module.

In an embodiment of the disclosure, when the motor switches to a low-speed mode or a high-speed mode, the energy storage module transmits a second power to the motor through the electrical energy distributor, and the electrical energy distributor turns off the engine generator.

In an embodiment of the disclosure, when electric quantity of the energy storage module is higher than a predetermined value, the electrical energy distributor turns off the engine generator and the energy storage module supplies a second power to the motor.

In an embodiment of the disclosure, when electric quantity of the energy storage module is lower than a predetermined value, the electrical energy distributor turns on the engine generator to provide the first power to the motor and the energy storage module.

In an embodiment of the disclosure, the engine generator rotates at a constant speed, the motor operates dynamically to consume a part of the first power, and the other part of the first power is transmitted to the energy storage module through the electrical energy distributor to dynamically charge the energy storage module.

In an embodiment of the disclosure, the energy storage module includes multiple aluminum-ion batteries.

In an embodiment of the disclosure, the energy storage module and the engine generator are connected in parallel to the electrical energy distributor.

In an embodiment of the disclosure, the transmission module has a gear set, a differential, a plurality of rotating shafts, and a plurality of tires, the gear set is coupled to the motor, the differential is meshed with the gear set, the rotating shafts are disposed on opposite sides of the differential and extend in an axial direction, and the tires are respectively mounted on the rotating shafts.

Based on the above, the hybrid power system of the disclosure is suitable for vehicles or similar carriers, and the hybrid power system combines an engine generator and an energy storage module as an electrical energy source. The engine generator is only used to generate electrical energy, and supplies part of the electrical energy to the motor to generate power, and the other part of the electrical energy is stored in the energy storage module. The electrical energy of the energy storage module is supplied to the motor through the electrical energy distributor to generate power.

As the disclosure only generates power through the motor, and according to the high-speed mode or low-speed mode of the motor, it will automatically switch to the engine generator to supply the electrical energy required by the motor or the energy storage module to supply the electrical energy required by the motor, so that sufficient electric power may be generated for the motor and the energy storage module at all speeds. Compared with the existing fuel-electricity hybrid power system which requires the design of two sets of transmission systems, the hybrid power system of the disclosure does not need to equip the engine generator with a power transmission mechanism, so the mounting position of the engine generator in the vehicle carrier is relatively flexible. In addition, the engine generator of the disclosure operates only at a constant speed in the high-speed mode to generate electrical energy, thereby improving fuel efficiency and reducing pollutant emissions

To make the aforementioned more comprehensible, several embodiments accompanied with drawings are described in detail as follows.

### BRIEF DESCRIPTION OF THE DRAWINGS

The accompanying drawings are included to provide a further understanding of the disclosure, and are incorporated in and constitute a part of this specification. The drawings illustrate example embodiments of the disclosure and, together with the description, serve to explain the principles of the disclosure.
FIG. 1A is a block diagram of a hybrid power system according to an embodiment of the disclosure.
FIG. 1B is a block diagram of power transmission in a low-speed mode of the hybrid power system in FIG. 1A.
FIG. 1C is a line diagram of power output of an energy storage module of the hybrid power system in FIG. 1B.
FIG. 1D is a schematic diagram of power transmission in a high-speed mode of the hybrid power system in FIG. 1A.
FIG. 2A is a schematic diagram of the optimized power operation of an engine generator of a hybrid electrical energy system in FIG. 1D.
FIG. 2B is a schematic diagram of power convergence of an engine generator of the hybrid electrical energy system in FIG. 2A.
FIG. 2C is a schematic diagram of power interaction between an energy storage module and the engine generator of the hybrid electrical energy system in FIG. 1D.
FIG. 2D is a schematic diagram comparing the output power of an internal combustion engine and the power consumed by a motor of the hybrid electrical energy system in FIG. 2C.
FIG. 2E is a schematic diagram of the output power of the internal combustion engine minus the power consumed by the motor of the hybrid electrical energy system of FIG. 2D.

### DESCRIPTION OF THE EMBODIMENTS

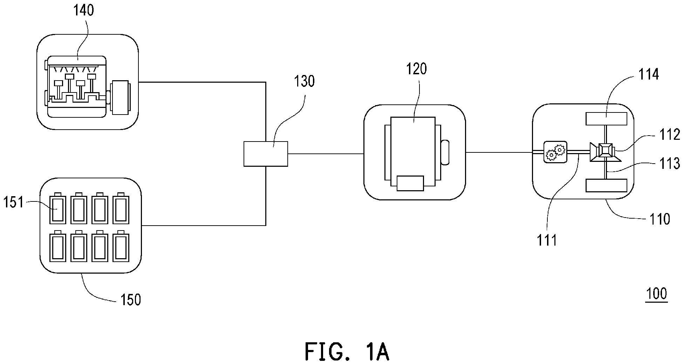

FIG. 1A is a block diagram of a hybrid power system according to an embodiment of the disclosure.

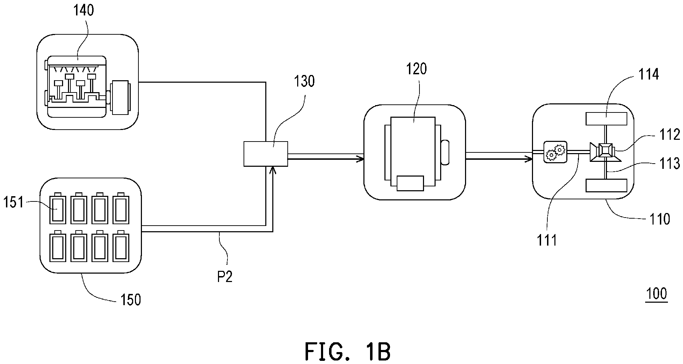

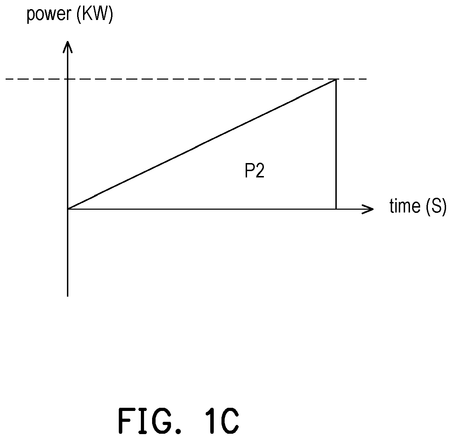

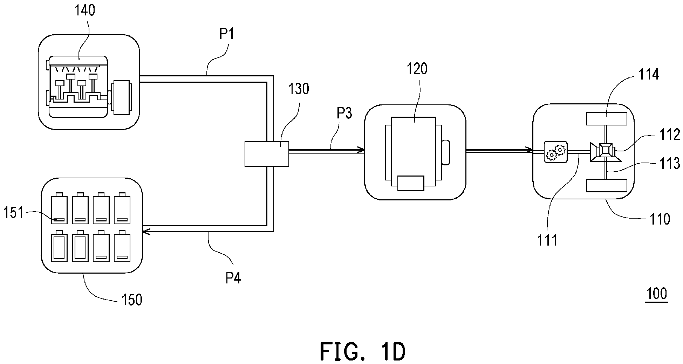

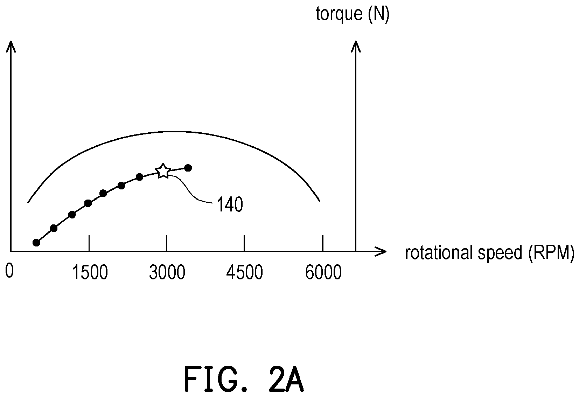

FIG. 1B is a block diagram of power transmission in a low-speed mode of the hybrid power system in FIG. 1A. FIG. 1C is a line diagram of power output of an energy storage module of the hybrid power system in FIG. 1B. FIG. 1D is a schematic diagram of power transmission in a high-speed mode of the hybrid power system in FIG. 1A. FIG. 2A is a schematic diagram of the optimized power operation of an engine generator of a hybrid electrical energy system in FIG. 1D.

Referring to FIG. 1A, a hybrid power system 100 of the disclosure includes a transmission module 110, a motor 120, an electrical energy distributor 130, an engine generator 140, and an energy storage module 150. The motor 120 is connected to the transmission module 110. The electrical energy distributor 130 is coupled to the motor 120. The engine generator 140 is coupled to the electrical energy distributor 130 and is adapted to generate electrical energy. The energy storage module 150 is coupled to the electrical energy distributor 130 and is adapted to store electrical energy.

In detail, the transmission module 110 is suitable for vehicle carriers and has a gear set 111, a differential 112, multiple rotating shafts 113, and a multiple tires 114. The gear set 111 is coupled to the motor 120 and configured to transmit power from the motor 120. The differential 112 is meshed with the gear set 111 to balance the difference between left and right tires during cornering to ensure vehicle stability and maneuverability. The rotating shafts 113 are disposed on opposite sides of the differential 112 and extend in an axial direction. The tires 114 are respectively mounted on the rotating shafts 113 and rotate with the rotating shafts 113.

The motor 120 may convert electrical energy into mechanical energy, and generate kinetic energy by applying work to the transmission module 110 to drive the vehicle carrier. The engine generator 140 is adapted to burn fuel to convert chemical energy into mechanical energy, and then convert mechanical energy into electrical energy through electromagnetic induction. The energy storage module 150 includes multiple aluminum-ion batteries 151, in which the aluminum-ion batteries 151 are connected in series. Furthermore, the aluminum-ion batteries 151 are charged and discharged synchronously.

For example, the electrical energy distributor 130 is installed on a vehicle carrier and adjusts the operating status of the engine generator 140 and the energy storage module 150 according to the traveling speed of the vehicle carrier, so as to achieve the purpose of the hybrid power system 100 automatically switching the power supply source according to the driving status. The energy storage module 150 and the engine generator 140 are connected in parallel to the electrical energy distributor 130.

Referring to FIG. 1D and FIG. 2A, when storage capacity of the energy storage module 150 is insufficient, the engine generator 140 is adapted to rotate at a constant speed to generate a first power P1, and the electrical energy distributor 130 provides the first power P1 to the motor 120 and the energy storage module. 150.

Referring to FIG. 1B and FIG. 1C, when the motor 120 switches to a low-speed mode or a high-speed mode, the energy storage module 150 transmits a second power P2 to the motor 120 through the electrical energy distributor 130, and the electrical energy distributor 130 turns off the engine generator 140.

With reference to FIG. 1C, when electric quantity of the energy storage module 150 is higher than a predetermined value, the electrical energy distributor 130 turns off the engine generator 140 and the energy storage module 150 supplies the second power P2 to the motor 120.

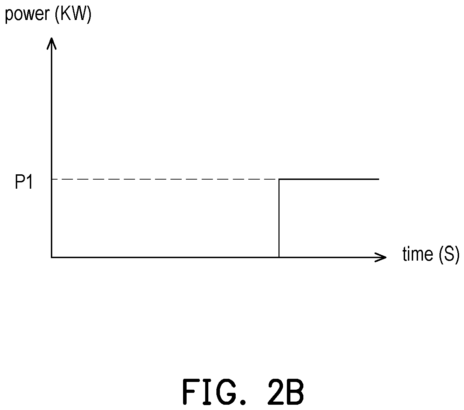

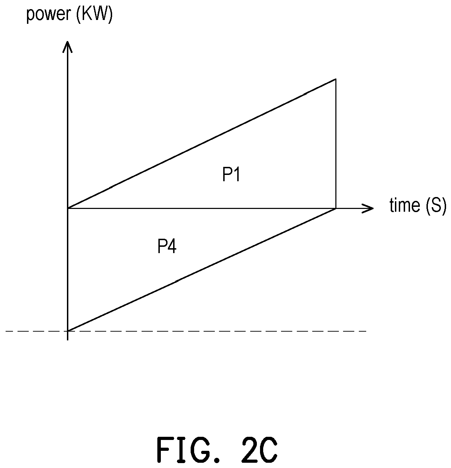

FIG. 2B is a schematic diagram of power convergence of an engine generator of the hybrid electrical energy system in FIG. 2A. FIG. 2C is a schematic diagram of power interaction between an energy storage module and the engine generator of the hybrid electrical energy system in FIG. 1D.

Referring to FIG. 2A to FIG. 2C, when the electric quantity of the energy storage module 150 is lower than the predetermined value, the electrical energy distributor 130 turns on the engine generator 140 to provide the first power P1 to the motor 120 and the energy storage module 150.

In short, the hybrid power system 100 of the disclosure optimizes operating efficiency of the engine generator 140 to improve fuel utilization, and the energy storage module 150 serves as the main power source of the hybrid power system 100. The engine generator 140 is only charged when the electric quantity of the energy storage module 150 is insufficient and at the same time provides electrical energy to the motor 120 (see FIG. 2C), so that the engine generator 140 is not turned on with the operation of the motor 120, and the engine generator 140 maintains a constant speed during the charging process (see FIG. 2B) to maximize the efficiency of the engine generator 140.

Supplementally, referring to FIG. 2A to FIG. 2C, an operating speed of the engine generator 140 has converged to a single point, and the optimal rotational speed of the engine generator 140 shown in FIG. 2A is 3000 (rpm). The power output, fuel efficiency, and pollutant emissions are most effective at the optimal rotational speed of the engine generator 140, which may minimize the fuel consumption and emission pollutions of the engine generator 140, and thus the engine generator 140 is intended to maximize the conversion of the fuel energy into electrical energy and storage.

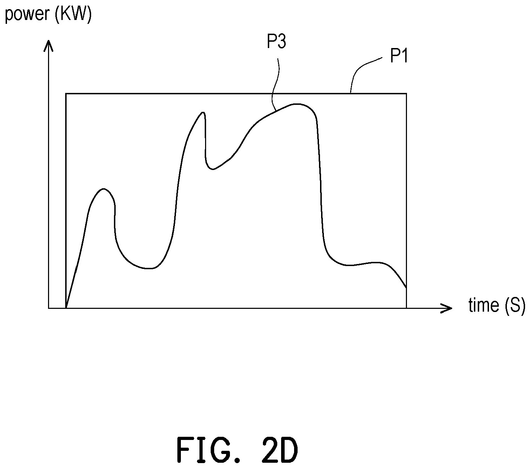

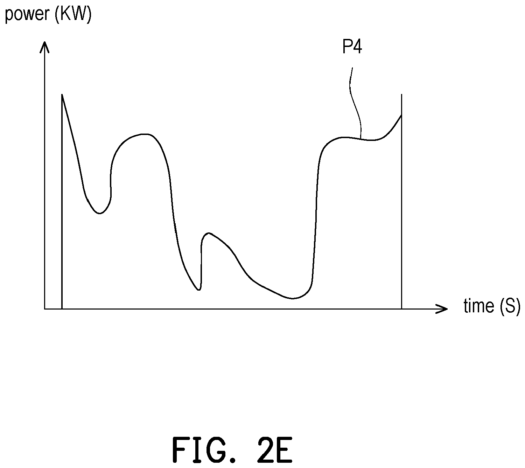

FIG. 2D is a schematic diagram comparing the output power of an internal combustion engine and the power consumed by a motor of the hybrid electrical energy system in FIG. 2C. FIG. 2E is a schematic diagram of the output power of the internal combustion engine minus the power consumed by the motor of the hybrid electrical energy system of FIG. 2D.

Referring to FIG. 2B and FIG. 2D, the engine generator 140 rotates at a constant speed (3000 rpm shown in FIG. 2A) to generate the first power P1. The motor 120 operates dynamically and has a motor consumption power P3 to consume a part of the first power P1, and the other part of the first power P1 is transmitted to the energy storage module 150 through the electrical energy distributor 130 to dynamically charge the energy storage module 150.

In addition, the resistance and speed of the vehicle carrier during driving change dynamically, so the motor power consumption P3 of the motor 120 presents an irregular curve. Referring to FIG. 2E, this curve is a residual power P4 of the first power P1 minus the motor consumption power P3, and this residual power P4 will be transmitted to the energy storage module 150 through the electrical energy distributor 130.

Since the disclosure raises the second power P2 of the energy storage module 150 to a level where it can directly supply the motor 120 to operate, so that the engine generator 140 can operate at a constant speed. Compared to the existing technology where the change in the rotational speed of the engine generator 140 changes from a dynamic value to a fixed value, and a charging power of the energy storage module 150 changes from a fixed value to a dynamic value, the energy storage module 150 adopts aluminum ions and possesses the characteristic of quick charging and discharging, which may shorten the charging time of the energy storage module 150.

Referring to FIG. 1B and FIG. 1C, when the storage capacity of the energy storage module 150 is normal, the energy storage module 150 will fully supply the electrical energy required by the motor 120.

Referring to FIG. 1D, FIG. 2C, and FIG. 2D, when the storage capacity of the energy storage module 150 is insufficient, the engine generator 140 is turned on to supply electrical energy to the motor 120 and charges the energy storage module 150 at the same time. Based on the above, the rotational speed of the engine generator 140 is not affected by road conditions and power demand, the motor 120 will arbitrarily extract the first power P1 generated by the engine generator 140 to maintain operation, and the residual power P4 of the first power P1 minus the motor consumption power P3 will be fully recharged to the energy storage module 150.

In short, when the engine generator 140 dynamically charges the energy storage module 150, the vehicle carrier may still be driven normally without being affected.

Based on the above, the hybrid power system of the disclosure is suitable for vehicles or similar carriers, and the hybrid power system combines an engine generator and an energy storage module as an electrical energy source. The engine generator is only used to generate electrical energy, and supplies part of the electrical energy to the motor to generate power, and the other part of the electrical energy is stored in the energy storage module. The electrical energy of the energy storage module is supplied to the motor through the electrical energy distributor to generate power.

As the disclosure only generates power through the motor, and according to the high-speed mode or low-speed mode of the motor, it will automatically switch to the engine generator to supply the electrical energy required by the motor or the energy storage module to supply the electrical energy required by the motor, so that sufficient electric power may be generated for the motor and the energy storage module at all speeds. Compared with the existing fuel-electricity hybrid power system which requires the design of two sets of transmission systems, the hybrid power system of the disclosure does not need to equip the engine generator with a power transmission mechanism, so the mounting position of the engine generator in the vehicle carrier is relatively flexible. In addition, the engine generator of the disclosure operates only at a constant speed to generate electrical energy, thereby improving fuel efficiency and reducing pollutant emissions.

Compared with the existing technology, the disclosure has the advantage that the rotational speed and torque of the engine generator are not affected by the rotational speed or power demand of the vehicle carrier, and the engine generator is operated at a constant speed in the working zone with the highest energy efficiency right after the engine generator has been turned on, and the engine generator will continue to be operated until the energy storage module is full, so as to minimize the number of times of turning on of the engine generator. In addition, the fast-charging feature of the energy storage module may also reduce the running time of the engine generator.

## Claims

1. A hybrid power system (100), comprising:
a transmission module (110);
a motor, connected to the transmission module (110);
an electrical energy distributor (130), coupled to the motor;
an engine generator (140), coupled to the electrical energy distributor (130); and
an energy storage module (150), coupled to the electrical energy distributor (130),
wherein the engine generator (140) is adapted to rotate at a constant speed to generate a first power (P1), and the electrical energy distributor (130) provides the first power (P1) to the motor and the energy storage module (150).

2. The hybrid power system (100) according to claim 1, wherein when the motor switches to a low-speed mode or a high-speed mode, the energy storage module (150) transmits a second power (P2) to the motor through the electrical energy distributor (130), and the electrical energy distributor (130) turns off the engine generator (140).

3. The hybrid power system (100) according to claim 1, wherein when electric quantity of the energy storage module (150) is higher than a predetermined value, the electrical energy distributor (130) turns off the engine generator (140) and the energy storage module (150) supplies a second power (P2) to the motor.

4. The hybrid power system (100) according to claim 1, wherein when electric quantity of the energy storage module (150) is lower than a predetermined value, the electrical energy distributor (130) turns on the engine generator (140) to provide the first power (P1) to the motor and the energy storage module (150).

5. The hybrid power system (100) according to claim 1, wherein the engine generator (140) rotates at a constant speed, the motor operates dynamically to consume a part of the first power (P1), and the other part of the first power (P1) is transmitted to the energy storage module (150) through the electrical energy distributor (130) to dynamically charge the energy storage module (150).

6. The hybrid power system (100) according to claim 1, wherein the energy storage module (150) comprises a plurality of aluminum-ion batteries (151).

7. The hybrid power system (100) according to claim 1, wherein the energy storage module (150) and the engine generator (140) are connected in parallel to the electrical energy distributor (130).

8. The hybrid power system (100) according to claim 1, wherein the transmission module (110) has a gear set (111), a differential, a plurality of rotating shafts (113), and a plurality of tires (114), the gear set (111) is coupled to the motor, the differential (112) is meshed with the gear set (111), the rotating shafts are disposed on opposite sides of the differential (112) and extend in an axial direction, and the tires (114) are respectively mounted on the rotating shafts (113).
